# EUROPÄISCHE PATENTSCHRIFT

(11) **EP 3 412 191 B1**
(45) Veröffentlichungstag und Bekanntmachung des Hinweises auf die Patenterteilung: **27.04.2022**
(21) Anmeldenummer: 18172086.3
(22) Anmeldetag: 14.05.2018
(51) Int. Cl.: A47L 9/28

(54) **SICH SELBSTTÄTIG FORTBEWEGENDES BODENBEARBEITUNGSGERÄT**
AUTOMATIC SOIL PREPARATION EQUIPMENT
APPAREIL DE TRAITEMENT DU SOL SE DÉPLAÇANT AUTOMATIQUEMENT

(30) Priorität: 09.06.2017 DE 102017112796
(43) Veröffentlichungstag der Anmeldung: 12.12.2018
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 47057 Duisburg (DE); Schmidt, Andreas, 40822 Mettmann (DE)
(74) Vertreter: Müller, Enno

(56) Entgegenhaltungen:
- WO-A1-2016/133320
- DE-A1-102015 106 536
- JP-A- 2007 029 489

## Beschreibung

### Gebiet der Technik

Die Erfindung betrifft ein sich selbsttätig fortbewegendes Bodenbearbeitungsgerät mit einem Bodenbearbeitungselement zum Einwirken auf eine zu bearbeitende Fläche und einer Steuereinrichtung zur Steuerung des Bodenbearbeitungselementes.

Ebenso betrifft die Erfindung ein System aus mindestens einem sich selbsttätig fortbewegenden Bodenbearbeitungsgerät, welches Bodenbearbeitungsgerät ein Bodenbearbeitungselement zum Einwirken auf eine zu bearbeitende Fläche aufweist, mindestens einem bezogen auf das Bodenbearbeitungsgerät externen Luftparametersensor und einer Steuereinrichtung.

Des Weiteren betrifft die Erfindung ein Verfahren zum Betrieb eines sich selbsttätig fortbewegenden Bodenbearbeitungsgerätes, wobei ein Bodenbearbeitungselement auf eine zu bearbeitende Fläche einwirkt und wobei eine Steuereinrichtung das Bodenbearbeitungselement steuert, sowie ein Verfahren zum Betrieb eines Systems aus mindestens einem sich selbsttätig fortbewegenden Bodenbearbeitungsgerät und mindestens einem bezogen auf das Bodenbearbeitungsgerät externen Luftparametersensor.

### Stand der Technik

Sich selbsttätig fortbewegende Bodenbearbeitungsgeräte und Verfahren zu deren Betrieb sind im Stand der Technik bekannt.

Bodenbearbeitungsgeräte dieser Art können beispielsweise als Reinigungsroboter ausgebildet sein, welche eine Navigationseinrichtung zum selbstständigen Fortbewegen und Orientieren in einer Umgebung aufweisen. Die Navigationseinrichtung kann beispielsweise einen Abstandssensor aufweisen, welcher Abstände zu Hindernissen innerhalb der Umgebung misst, gegebenenfalls zusätzlich Kontaktsensoren und/ oder eine Odometrie-Messeinrichtung, welche eine zurückgelegte Strecke misst. Anhand der Messdaten kann eine Umgebungskarte für das Bodenbearbeitungsgerät erstellt werden, mittels welcher sich das Bodenbearbeitungsgerät orientieren kann.

Die Druckschrift DE 10 2008 014 912 A1 offenbart beispielsweise ein sich selbsttätig fortbewegendes Bodenbearbeitungsgerät mit einem optischen Triangulationssystem zur Abstandsmessung. Das Triangulationssystem weist unter anderem eine Lichtquelle und einen Sensor für die von einem gemessenen Objekt reflektierten Lichtstrahlen auf.

Des Weiteren ist es im Stand der Technik bekannt, derartige Bodenbearbeitungsgeräte neben dem Navigationssystem und einem oder mehreren Bodenbearbeitungselementen zum Einwirken auf eine zu bearbeitende Fläche auch mit weiteren Elementen auszustatten, welche eine Zusatzaufgabe des Bodenbearbeitungsgerätes ermöglichen.

Die Druckschrift DE 10 2015 113 035 A1 offenbart beispielsweise ein Bodenbearbeitungsgerät, welches in Verbindung mit einem externen Element eine Detektion von Rauch innerhalb der Umgebung ermöglicht. Das Bodenbearbeitungsgerät weist eine Auswerteeinrichtung auf, welche ausgebildet ist, während einer Zusammenwirkung eines optischen Elementes des Bodenbearbeitungsgerätes und des externen Elementes eine Anwesenheit von Rauch zwischen dem optischen Element und dem externen Element zu detektieren und ein Alarmsignal zu veranlassen.

Die Druckschrift DE 10 2015 106 536 A1 betrifft einen Haushaltsroboter mit einer Sensorik zum Erfassen einer Umgebung, wobei Erfassungsmittel zum Erfassen eines von Exkrementen eines Lebewesens verunreinigten Teilbereichs einer Bodenfläche vorgesehen sind und in Abhängigkeit von einem Signal der Erfassungsmittel die Funktionsweise des Haushaltsroboters verändert wird, um ein Überfahren des verunreinigten Teilbereichs zu verhindern.

Die Druckschrift WO 2016/133320 A1 offenbart einen Reinigungsroboter mit einer Detektionseinrichtung zum Detektieren von Umgebungsinformationen und eine erste Kommunikationseinrichtung zum Übermitteln von Daten und Empfangen von Daten eines anderen Gerätes in der Umgebung, wobei der Reinigungsroboter des Weiteren eines Steuereinrichtung aufweist, welche eingerichtet ist, einen Steuerbefehl für das andere Gerät zu generieren, um die Umgebungsinformation anzupassen. Die Umgebungsinformation kann eine Temperatur, einen Feuchtegrad, ein Luftdruck oder ein Grad einer Luftverschmutzung sein. Das andere Gerät ist beispielsweise eine Klimaanlage oder ein automatisch verschließbares Fenster.

Die Druckschrift JP 2007029489 (A) offenbart ein sich selbsttätig fortbewegendes Reinigungsgerät mit einem Geruchssensor zum Detektieren unangenehmer Gerüche von eingesaugtem Staub. Eine Analyseeinrichtung ist eingerichtet, die Detektionssignale dahingehend auszuwerten, ob ein Kleintier in der Umgebung anwesend ist. In Abhängigkeit von dem Analyseergebnis kann dann eine Reinigungsfrequenz zum Reinigen der Umgebung angepasst werden.

### Zusammenfassung der Erfindung

Ausgehend von dem vorgenannten Stand der Technik ist es Aufgabe der Erfindung, ein sich selbsttätig fortbewegendes Bodenbearbeitungsgerät zu schaffen, welches vorteilhaft weitergebildet ist.

Zur Lösung der vorgenannten Aufgabe wird zunächst ein sich selbsttätig fortbewegendes Bodenbearbeitungsgerät mit einem Bodenbearbeitungselement zum Einwirken auf eine zu bearbeitende Fläche und einer Steuereinrichtung zur Steuerung des Bodenbearbeitungselementes vorgeschlagen, wobei die Steuereinrichtung ausgebildet ist, das Bodenbearbeitungselement automatisch in Abhängigkeit von in einer externen Speichereinrichtung gespeicherten, eine Luftqualität betreffenden Umweltdaten zu steuern.

Erfindungsgemäß ist das Bodenbearbeitungsgerät nun eingerichtet, auf zentral gespeicherte Umweltdaten zu reagieren und eine Bodenbearbeitung mittels des Bodenbearbeitungselementes vorzunehmen. Bspw. können in der Umgebungsluft enthaltene Pollen in einen Wohnraum eingetragen werden und sich dort auf Flächen, insbesondere auf Bodenflächen, niederschlagen. Durch Bewegungen innerhalb des Wohnraums, bspw. durch Personen und/ oder Tiere, sowie ggf. durch bei einem Lüften verursachte Luftbewegungen, werden die Pollen oder ggf. weitere Partikel aufgewirbelt und durchsetzen die Umgebungsluft. Eine dadurch hervorgerufene Beeinträchtigung der Luftqualität, insbesondere in Bezug auf Allergien, wird nun durch gezielte Steuerung des Bodenbearbeitungselementes für eine Bodenbearbeitung, insbesondere Reinigung, beseitigt bzw. zumindest reduziert. Die Steuereinrichtung des Bodenbearbeitungselementes weist dabei eine Kommunikationsverbindung zu einer externen Speichereinrichtung auf, in welcher relevante Umweltdaten gespeichert sind. Auf der Basis der gespeicherten Umweltdaten kann nun ein Einsatz des Bodenbearbeitungsgerätes bzw. dessen Bodenbearbeitungselementes gesteuert werden. Insbesondere kann das Bodenbearbeitungsgerät auf der Basis von tagesaktuellen und standortbezogenen Pollenfluginformationen, welche in einem Webserver gespeichert sind, die Planung einer Reinigung oder eines Reinigungszyklus anpassen, so dass bspw. an Zeitpunkten oder Tagen mit oder nach erhöhter Pollenbelastung häufiger gereinigt wird als dies üblicherweise der Fall ist. Dabei kann das zum Einsatz kommende Bodenbearbeitungselement insbesondere ein Feuchtreinigungselement sein, da dieses effektiver Pollen bzw. andere Partikel von einer Hartbodenfläche aufnimmt, als dies bei einer reinen Saugreinigung der Fall wäre.

Des Weiteren wird vorgeschlagen, dass das Bodenbearbeitungsgerät eine Luftreinigungseinrichtung zum Reinigen von Umgebungsluft aufweist, wobei die Steuereinrichtung eingerichtet ist, die Luftreinigungseinrichtung zu steuern.

Gemäß dieser Ausführung weist das Bodenbearbeitungsgerät neben dem Bodenbearbeitungselement zusätzlich eine Luftreinigungseinrichtung auf. Das Bodenbearbeitungsgerät kann grundsätzlich jedes sich selbsttätig fortbewegende Gerät sein, insbesondere ein Reinigungsgerät wie beispielsweise ein Saugroboter, ein Wischroboter oder dergleichen. Darüber hinaus kann das Bodenbearbeitungsgerät grundsätzlich auch ein Mähroboter, ein Schleif- und/ oder Poliergerät sein.

In Abhängigkeit von beispielsweise der Luftqualität, kann die Steuereinrichtung daraufhin einen Betrieb des Bodenbearbeitungselementes und/ oder der Luftreinigungseinrichtung steuern. Die Steuereinrichtung kann bei Vorliegen einer Rauchpartikelmenge, welche einen Grenzwert überschreitet, das Bodenbearbeitungselement des Bodenbearbeitungsgerätes für eine Reinigung einer Bodenfläche und die Luftreinigungseinrichtung für die Entfernung von Rauchpartikeln aus der Umgebungsluft steuern. Somit können unabhängig voneinander, oder auch zeitlich parallel zwei verschiedene Reinigungsverfahren zur Reinigung der Umgebung angewandt werden.

Die Steuereinrichtung des Bodenbearbeitungsgerätes kann eine Kommunikationsverbindung zu einer externen Speichereinrichtung aufweisen, in welcher eine Luftqualität betreffende Umweltdaten gespeichert sind. Insbesondere kann die Steuereinrichtung eine Kommunikationsverbindung zu einem zentralen Webserver, beispielsweise einer sogenannten Cloud, aufweisen. Die Luftqualität betreffende Umweltdaten können zum einen Grenzwerte sein, welche in der Umgebungsluft befindliche Stoffe betreffen, beispielsweise Schwellwerte für Partikel, Pollen, Metalle, Staub, Kohlenwasserstoffe, Kohlenmonoxid und dergleichen. Daneben können Umweltdaten auch eine aktuelle und/ oder zu erwartende Pollenbelastung aus einer Pollenvorhersage beinhalten. Somit kann einerseits beispielsweise eine lokale Pollenbelastung mittels des Luftparametersensors des Bodenbearbeitungsgerätes bestimmt werden, und andererseits kann die Steuereinrichtung des Bodenbearbeitungsgerätes auch auf eine Online-Datenbank zugreifen, welche eine Pollenvorhersage für den Einsatzort des Bodenbearbeitungsgerätes angibt. In diesem Zusammenhang kann es beispielsweise auch vorgesehen sein, einen in einem Speicher des Bodenbearbeitungsgerätes oder innerhalb der externen Speichereinrichtung hinterlegten Einsatzplan des Bodenbearbeitungsgerätes in Abhängigkeit von einer vorausgesagten Pollenbelastung und/ oder anderen voraussagbaren Umweltparametern, beispielsweise Sandstürmen oder dergleichen, anzupassen, um beispielsweise einen sofortigen Einsatz des Bodenbearbeitungselementes und/ oder der Luftreinigungseinrichtung des Bodenbearbeitungsgerätes zu starten, zu beenden oder einen künftigen Zeitpunkt und/ oder eine Frequenz eines künftigen Einsatzes des Bodenbearbeitungselementes bzw. der Luftreinigungseinrichtung anzupassen.

Neben dem Bodenbearbeitungsgerät wird mit der Erfindung des Weiteren ein System aus mindestens einem sich selbsttätig fortbewegenden Bodenbearbeitungsgerät, welches Bodenbearbeitungsgerät ein Bodenbearbeitungselement zum Einwirken auf eine zu bearbeitende Fläche aufweist, mindestens einem bezogen auf das Bearbeitungsgerät externen Luftparametersensor und einer Steuereinrichtung vorgeschlagen, wobei die Steuereinrichtung ausgebildet ist, in Abhängigkeit von einem Messergebnis des Luftparametersensors das Bodenbearbeitungselement und/ oder eine bezogen auf das Bearbeitungsgerät externe Luftreinigungseinrichtung zum Reinigen von Umgebungsluft zu steuern.

Der Luftparametersensor kann beispielsweise ein Partikelsensor, ein Pollensensor, ein Metallsensor, ein Staubsensor, ein Kohlenwasserstoff-Sensor, ein CO₂-Sensor, ein SOx-Sensor, ein NOx-Sensor, ein Luftfeuchtesensor oder ein anderer Sensor, welcher in der Luft befindliche Stoffe misst, sein. Die Luftreinigungseinrichtung weist vorzugsweise ein Filtermaterial zum Filtern von einem oder mehreren gesundheitsschädlichen Stoffen aus der Umgebungsluft auf. Insbesondere kann das Filtermaterial geeignet sein, Metalle, Formaldehyd, Toluol, Pollen, Rauchpartikel, Staub, Kohlenwasserstoffe, CO₂, SOx, NOx, Pilzsporen oder Allergene aus der Umgebungsluft herauszufiltern. Das Filtermaterial kann beispielsweise ein Filtervlies, einen Elektrostatikfilter, Aktivkohle, Katalysatoren, Hepafilter, waschbare Textilfilter oder dergleichen aufweisen. Des Weiteren kann die Luftreinigungseinrichtung auch einen Entfeuchter aufweisen, welcher Feuchtigkeit aus der Umgebungsluft aufnimmt. Hierzu kann der Luftentfeuchter beispielsweise ein Gebläse zum Ansaugen von Umgebungsluft aufweisen und eine Kondensationseinrichtung, an welcher in der Umgebungsluft enthaltene Flüssigkeit kondensieren kann.

Gemäß dieser Ausführung ist es nicht erforderlich, dass die Luftreinigungseinrichtung, der Luftparametersensor und/ oder die Steuereinrichtung Elemente des Bodenbearbeitungsgerätes sind. Vielmehr -sind diese separate Einrichtungen-, welche zusammen mit dem Bodenbearbeitungsgerät ein System bilden. Grundsätzlich kann das Bodenbearbeitungsgerät auch ein zuvor beschriebenes Bodenbearbeitungsgerät sein, oder ein solches, welches neben dem Bodenbearbeitungselement zumindest selbst einen Luftparametersensor oder eine Luftreinigungseinrichtung aufweist. Gemäß dieser Ausführung weist das System dann beispielsweise zum einen den Luftparametersensor des Bodenbearbeitungsgerätes und zum anderen einen externen Luftparametersensor auf, oder eine Luftreinigungseinrichtung des Bodenbearbeitungsgerätes und eine externe Luftreinigungseinrichtung. Die mehreren Luftparametersensoren bzw. Luftreinigungseinrichtungen können von einer Steuereinrichtung vorteilhaft zur Zusammenwirkung und/ oder gegenseitigen Ergänzung gesteuert werden. Das System umfasst zumindest ein autonomes Bodenbearbeitungsgerät, wie beispielsweise einen Reinigungsroboter, einen oder mehrere Luftparametersensoren sowie eine oder mehrere Luftreinigungseinrichtungen. Ein externer Luftparametersensor bzw. eine externe Luftreinigungseinrichtung steht in Kommunikationsverbindung mit der Steuereinrichtung, so dass stets bekannt ist, welche Komponenten innerhalb des Systems vorhanden sind. Vorteilhaft sind die Komponenten an der Steuereinrichtung registriert. Bei der Registrierung kann beispielsweise der Gerätetyp und/ oder Gerätestandort erfasst werden. Die Registrierung kann automatisch durchgeführt werden, beispielsweise bei einer Erstinbetriebnahme der jeweiligen Komponente, und/ oder durch eine manuelle Eingabe an der Steuereinheit, wobei beispielsweise eine Komponente aus einer vordefinierten Liste auswählbar ist.

Der Luftparametersensor des Systems kann ein Sensor des Bodenbearbeitungsgerätes, der Luftreinigungseinrichtung und/ oder der Steuereinrichtung sein. Sofern es sich bei der Luftreinigungseinrichtung bzw. der Steuereinrichtung um ein zu dem Bodenbearbeitungsgerät separates Gerät handelt, kann darin auch der Luftparametersensor integriert sein. Beispielsweise kann die Luftreinigungseinrichtung eine Schadstofffiltereinheit sein, welche gleichzeitig auch einen Schadstoffsensor aufweist. Eine Pollenfiltereinheit kann gleichzeitig auch einen Pollensensor aufweisen und dergleichen. Alternativ könnte der Luftparametersensor in keine der sonstigen Komponenten des Systems integriert sein, sondern ein separater Luftparametersensor sein, welcher in Verbindung mit der Steuereinrichtung des Systems steht. Ein separater Luftparametersensor ist beispielsweise nach der Art bekannter Rauchsensoren oder dergleichen ausgestaltet, welche in einem Raumbereich installiert werden können und ein Messsignal an eine Steuer- und Auswerteeinrichtung übermitteln.

Des Weiteren wird vorgeschlagen, dass die Steuereinrichtung eine Einrichtung des Bodenbearbeitungsgerätes oder der Luftreinigungseinrichtung ist. Die Steuereinrichtung dient als zentrale Steuereinrichtung für das erfindungsgemäße System und kann in eine Komponente des Systems, wie beispielsweise dem Bodenbearbeitungsgerät oder der Luftreinigungseinrichtung, integriert sein. Alternativ könnte die Steuereinrichtung jedoch auch eine dedizierte Zentraleinheit sein, welche Kommunikationsverbindungen zu den sonstigen Komponenten des Systems aufweist. Die Kommunikation zwischen dem Bodenbearbeitungsgerät, der Luftreinigungseinrichtung, dem Luftparametersensor und/ oder der Steuereinrichtung erfolgt beispielsweise über eine Funkverbindung, insbesondere WLAN, oder über eine drahtgebundene Kommunikationsverbindung, beispielsweise PowerLAN. Die zentrale Steuereinrichtung des Systems kann darüber hinaus ausgebildet sein, Messdaten des Luftparametersensors oder auch externe Umweltdaten, beispielsweise Daten einer Pollenflugvorhersage, zu empfangen und zu überwachen. Des Weiteren steuert die zentrale Steuereinheit die einzelnen Komponenten des Systems, insbesondere einen Einsatz des Bodenbearbeitungselementes des Bodenbearbeitungsgerätes und/ oder eine Luftreinigungseinrichtung. Die Steuereinrichtung kann einen Vergleich der mittels des Luftparametersensors detektierten Messdaten mit in einem Speicher hinterlegten Grenzwerten vornehmen und bei Bedarf eine Luftreinigung bzw. eine Bodenbearbeitung steuern. Sofern die Steuereinrichtung beispielsweise eine Komponente des Bodenbearbeitungsgerätes ist, übernimmt das Bodenbearbeitungsgerät gleichzeitig auch die Funktion einer zentralen Steuereinheit und steuert die anderen Komponenten des Systems, beispielsweise die Luftreinigungseinrichtung und den Luftparametersensor. Des Weiteren kann die Steuereinrichtung in eine Luftreinigungseinrichtung integriert sein, so dass die Luftreinigungseinrichtung die Funktion der zentralen Steuereinheit übernimmt. Dabei kann es beispielsweise auch vorgesehen sein, dass die Luftreinigungseinrichtung bei Feststellen einer Existenz von Allergenen, Staub, Pestiziden, Metallen und dergleichen über einem bestimmten kritischen Grenzwert das Bodenbearbeitungselement des Bodenbearbeitungsgerätes für eine ergänzende Reinigung steuert, da eine alleinige Luftreinigung mittels der Luftreinigungseinrichtung nicht mehr effektiv und/ oder ausreichend ist, um die Umgebung zu reinigen.

Des Weiteren kann vorgesehen sein, dass die Steuereinrichtung eine Kommunikationsverbindung zu einer externen Speichereinrichtung, insbesondere zu einem zentralen Webserver, aufweist, in welcher eine Luftqualität betreffende Umweltdaten gespeichert sind. Beispielsweise kann die externe Speichereinrichtung eine Datenbank aufweisen, in welcher zeitlich aktuell eine Pollenbelastung, eine Schwermetallbelastung, Sandstürme oder dergleichen für bestimmte Regionen gespeichert sind.

Des Weiteren ist es auch möglich, dass die Steuereinrichtung nicht als eine lokale Einheit ausgebildet ist, sondern ein in einer externen Speichereinrichtung gespeichertes Programm ist, welches die Komponenten des Systems fernsteuert.

Insbesondere wird vorgeschlagen, dass das Bodenbearbeitungsgerät ein Feuchtreinigungsgerät mit einem für eine Feuchtreinigung ausgebildeten Bodenbearbeitungselement und einer Flüssigkeitsauftragseinrichtung zum Auftragen von Flüssigkeit auf das Bodenbearbeitungselement und/ oder eine zu bearbeitende Fläche ist. Sofern die Umgebungsluft beispielsweise mit Pollen, Partikeln, Staub, Allergenen oder dergleichen belastet ist, schlagen sich diese auch auf der Bodenfläche der Umgebung ab. Mit einer Feuchtreinigung, ausgeführt durch ein Feuchtreinigungsgerät, kann dabei grundsätzlich ein besseres Ergebnis erreicht werden als mit einer reinen Saugreinigung, beispielsweise durch einen Saugroboter. Das Feuchtreinigungsgerät weist als Bodenbearbeitungselement beispielsweise eine Reinigungswalze oder ein flächiges Reinigungselement auf, welche einen Flüssigkeit aufnehmenden Belag aufweisen, beispielsweise ein textiles Reinigungstuch, ein Vlies oder dergleichen. Das Feuchtreinigungsgerät ist vorzugsweise mit einer eigenen Flüssigkeitsauftragseinrichtung ausgestattet, welche Flüssigkeit aus einem Flüssigkeitstank auf das Bodenbearbeitungselement und/ oder direkt auf die zu bearbeitende Fläche leitet.

Neben dem zuvor beschriebenen Bodenbearbeitungsgerät und dem erfindungsgemäßen System wird des Weiteren auch ein Verfahren zum Betrieb eines sich selbsttätig fortbewegenden Bodenbearbeitungsgerätes vorgeschlagen, wobei ein Bodenbearbeitungselement auf eine zu bearbeitende Fläche einwirkt und wobei eine Steuereinrichtung das Bodenbearbeitungselement steuert, wobei die Steuereinrichtung das Bodenbearbeitungselement und/ oder eine Luftreinigungseinrichtung zum Reinigen von Umgebungsluft automatisch in Abhängigkeit von in einer externen Speichereinrichtung gespeicherten, eine Luftqualität betreffenden Umweltdaten steuert. Insbesondere wird vorgeschlagen, dass die Steuereinrichtung einen Luftparametersensor und/ oder eine Luftreinigungseinrichtung zum Reinigen von Umgebungsluft steuert, wobei die Steuereinrichtung insbesondere eingerichtet ist, in Abhängigkeit von einem Messergebnis des Luftparametersensors die Luftreinigungseinrichtung und/ oder das Bodenbearbeitungselement zu steuern.

Des Weiteren wird auch ein Verfahren zum Betrieb eines Systems aus mindestens einem sich selbsttätig fortbewegenden Bodenbearbeitungsgerät und mindestens einem bezogen auf das Bodenbearbeitungsgerät externen Luftparametersensor vorgeschlagen, wobei der Luftparametersensor einen Parameter einer Umgebungsluft misst und eine Steuereinrichtung in Abhängigkeit von einem Messergebnis des Luftparametersensors ein Bodenbearbeitungselement des Bodenbearbeitungsgerätes zum Reinigen einer Fläche unter Einsatz des Bodenbearbeitungselementes und/ oder eine bezogen auf das Bodenbearbeitungsgerät externe Luftreinigungseinrichtung zum Reinigen von Umgebungsluft steuert. Dieses Verfahren eignet sich zum Betrieb eines Systems aus mehreren separat zueinander ausgebildeten und angeordneten Komponenten, wie beispielsweise einer oder mehreren Luftreinigungseinrichtungen, einem oder mehreren Luftparametersensoren und einem Bodenbearbeitungsgerät.

Das Verfahren für den Betrieb des Bodenbearbeitungsgerätes bzw. das Verfahren zum Betrieb eines Systems beinhalten, dass ein Luftparametersensor einen Luftparameter der Umgebungsluft misst, beispielsweise einen Anteil von Pollen, Staubpartikeln, Metallpartikeln, Pestiziden, Allergenen, KohlenwasserStoffen, CO₂, SOx, NOx, Luftfeuchte innerhalb der Umgebungsluft. Dieses Messergebnis wird von der Steuereinrichtung empfangen und ausgewertet, gegebenenfalls mittels einer separaten Auswerteeinrichtung. Anschließend steuert die Steuereinrichtung Maßnahmen zur Verbesserung der Luftqualität, nämlich zum Entfernen der vorgenannten Partikel bzw. Schadstoffe aus der Umgebungsluft oder von einer Bodenfläche. Diese Maßnahmen beinhalten einen Betrieb der Luftreinigungseinrichtung zum Reinigen der Umgebungsluft und/ oder einen Betrieb des Bodenbearbeitungselementes des Bodenbearbeitungsgerätes. Die weiteren Merkmale und Vorteile des erfindungsgemäßen Verfahrens ergeben sich dabei wie zuvor in Bezug auf das Bodenbearbeitungsgerät bzw. das System beschrieben.

Insbesondere kann vorgesehen sein, dass die Steuereinrichtung auf eine externe Speichereinrichtung zugreift, in welcher eine Luftqualität betreffende Umweltdaten gespeichert sind. Die externe Speichereinrichtung kann beispielsweise ein zentraler Webserver sein. Die Luftqualität betreffende Umweltdaten sind beispielsweise online zur Verfügung gestellte Daten über Pollenbelastungen, Schadstoffbelastungen, Luftfeuchte und dergleichen. In Abhängigkeit von einem bekannten Standort des Bodenbearbeitungsgerätes und/ oder des Luftparametersensors und/ oder der Luftreinigungseinrichtung können in der externen Speichereinrichtung bereitgestellte Umweltdaten für diesen Standort abgefragt werden. Gegebenenfalls können die von einer Online-Datenbank bereitgestellten Umweltdaten auch in Verbindung mit lokalen Messdaten eines oder mehrerer Luftparametersensoren verglichen und/ oder bewertet werden.

Insgesamt ermöglichen die vorgeschlagenen Verfahren zum Betrieb eines sich selbsttätig sich fortbewegenden Bodenbearbeitungsgerätes bzw. zum Betrieb eines Systems aus einem oder mehreren Bodenbearbeitungsgeräten und mindestens einem Luftparametersensor nun ein Vernetzen mehrerer Bodenbearbeitungsgeräte miteinander, wobei individuelle Reinigungseinsätze eines oder mehrerer Bodenbearbeitungsgeräte anhand von Messungen oder Online auswertbaren Umweltdaten ausgeführt werden können, um z.B. eine Pollenbelastung innerhalb der Wohnräume aktiv zu vermindern. Dabei kann insbesondere von einer zentralen Speichereinrichtung je nach Belastungs- bzw. Verschmutzungssituation eine bestmögliche Reinigungsstrategie mit allen zur Verfügung stehenden Bodenbearbeitungsgeräten geplant und durchgeführt werden. Insbesondere kann eines oder können mehrere Bodenbearbeitungsgeräte auf der Basis von lokal gemessenen Luftparametern oder für bestimmte Regionen definierte Pollenfluginformationen aus einem lokalen Speicher oder aus einem Webserver herangezogen werden, um einen Einsatz eines Bodenbearbeitungsgerätes zu planen, einen Einsatzplan eines oder mehrerer Bodenbearbeitungselemente abzuändern, so dass entweder spontan oder auch im Vorhinein für Tage mit erhöhter Partikelbelastung, insbesondere Pollenbelastung, häufigere Bearbeitungszyklen geplant werden können. Insbesondere kann eine zentrale Steuereinrichtung eines Systems aus mehreren Bodenbearbeitungsgeräten ein für einen bestimmten Reinigungseinsatz geeignetes Bodenbearbeitungsgerät auswählen und entsprechend steuern. Neben den Bodenbearbeitungsgeräten bzw. deren Bodenbearbeitungselementen können auch separate Luftreinigungseinrichtungen gesteuert werden, welche dann zusätzlich eine Luftreinigung innerhalb der Wohnräume vornehmen.

### Kurze Beschreibung der Zeichnungen

Im Folgenden wird die Erfindung anhand von Ausführungsbeispielen näher erläutert. Es zeigen:
- Fig. 1: eine erste Ausführungsform der Erfindung,
- Fig. 2: eine zweite Ausführungsform der Erfindung,
- Fig. 3: eine dritte Ausführungsform der Erfindung,
- Fig. 4: eine vierte Ausführungsform der Erfindung.

### Beschreibung der Ausführungsformen

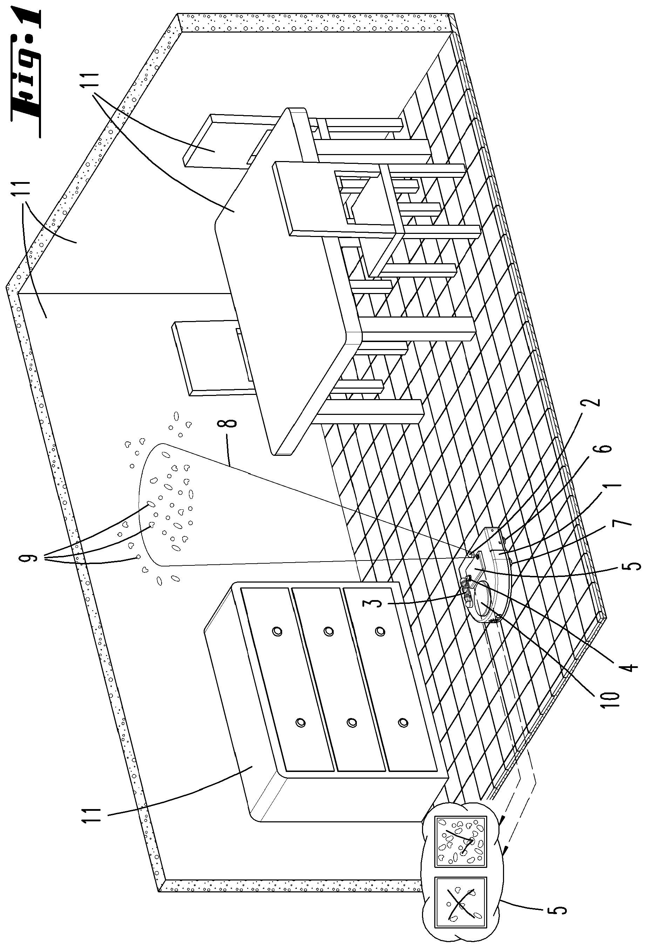

Figur 1 zeigt einen Raum einer Wohnung, hier beispielsweise ein Esszimmer, in welchem eine Mehrzahl von Hindernissen 11 vorhanden ist. Die Hindernisse 11 sind hier Möbelstücke wie beispielsweise ein Tisch, drei Stühle und ein Schubladenschrank. Hindernisse 11 sind des Weiteren auch Raumbegrenzungen des Raumes, nämlich die Wände.

In dem Raum befindet sich ein Bodenbearbeitungsgerät 1, welches hier beispielsweise als Feuchtwischgerät ausgebildet ist. Das Bodenbearbeitungsgerät 1 weist mehrere motorisch angetriebene Räder 7 zur Fortbewegung des Bodenbearbeitungsgerätes 1 innerhalb des Raumes auf. Des Weiteren verfügt das Bodenbearbeitungsgerät 1 über eine Navigationseinrichtung mit einer Hindernisdetektionseinrichtung 10, welche hier beispielsweise als optische Abstandsmesseinrichtung ausgebildet ist. Die Hindernisdetektionseinrichtung 10 misst Abstände zu den in dem Raum angeordneten Hindernissen 11. Eine Steuereinrichtung 4 des Bodenbearbeitungsgerätes 1 erstellt aus den Abstandsmessdaten eine Umgebungskarte des Raumes, bzw. gegebenenfalls weiterer Räume der Wohnung, anhand welcher sich das Bodenbearbeitungsgerät 1 während einer Fortbewegung orientieren kann.

Das Bodenbearbeitungsgerät 1 weist ein Bodenbearbeitungselement 6 auf, welches hier beispielsweise eine Reinigungswalze ist, die motorisch angetrieben rotiert und dabei über eine Bodenfläche des Raumes streicht. Alternativ sind selbstverständlich auch andere Arten von Bodenbearbeitungselementen 6 möglich, insbesondere flächige, mit einem Reinigungsbelag ausgestattete Platten. Dem Bodenbearbeitungselement 6 können ein Flüssigkeitstank und eine Flüssigkeitsauftragseinrichtung zugeordnet sein, welche geeignet sind, Flüssigkeit auf das Bodenbearbeitungselement 6 und/ oder die Bodenfläche aufzutragen, um einen Wischbetrieb des Bodenbearbeitungsgerätes 1 vorteilhaft durchführen zu können. Eine lokale Speichereinrichtung 5 des Bodenbearbeitungsgerätes 1 dient beispielsweise zur Speicherung der Umgebungskarte des Bodenbearbeitungsgerätes 1. Die Steuereinrichtung 4 steht mit der Speichereinrichtung 5 in Kommunikationsverbindung, so dass die Steuereinrichtung 4 auf die dort gespeicherten Daten zugreifen kann.

Das Bodenbearbeitungsgerät 1 weist des Weiteren eine Luftreinigungseinrichtung 3 auf, welche hier einen Pollenfilter beinhaltet. Des Weiteren weist das Bodenbearbeitungsgerät 1 einen Luftparametersensor 2 auf, welcher eingerichtet ist, Partikel 9 innerhalb eines Detektionsbereiches 8 des Luftparametersensors 2 zu messen. Die Partikel 9 sind hier beispielsweise innerhalb der Umgebungsluft vorhandene Pollen. Der Luftparametersensor 2 ist beispielsweise ein optischer Sensor, welcher eine Reflexionsgradmessung durchführt oder ein Bild der Umgebung aufnimmt. Die Messdaten werden von einer Auswerteeinrichtung des Bodenbearbeitungsgerätes 1 mit gespeicherten Referenzwerten verglichen, wobei die Referenzwerte innerhalb der Speichereinrichtung 5 des Bodenbearbeitungsgerätes 1 gespeichert sind. Hier wird beispielsweise ein Vergleich innerhalb der Speichereinrichtung 5 durchgeführt, wobei Referenzen für verschiedene Partikelkonzentrationen verglichen werden. Die Steuereinrichtung 4 des Bodenbearbeitungsgerätes 1 ist eingerichtet, das Bodenbearbeitungselement 6, die integrierte Luftreinigungseinrichtung 3 und auch den integrierten Luftparametersensor 2 zu steuern. Hierzu weist die Steuereinrichtung 4 eine Kommunikationsverbindung zu der jeweiligen Komponente auf.

Die Erfindung gemäß dieser Ausführungsform funktioniert beispielsweise so, dass das Bodenbearbeitungsgerät 1 innerhalb des dargestellten Raumes umherfährt, vorzugsweise unter Nutzung einer Umgebungskarte, innerhalb welcher die Hindernisse 11 verzeichnet sind. Während der Fortbewegung misst der Luftparametersensor 2 einen Luftparameter der das Bodenbearbeitungsgerät 1 umgebenden Umgebungsluft. Hier wird eine Konzentration von innerhalb des Detektionsbereiches 8 des Luftparametersensors 2 befindlichen Partikeln 9 gemessen. Beispielsweise sendet eine Lichtquelle des Luftparametersensors 2 Licht in den Raum aus und misst eine auf einen optischen Chip des Luftparametersensors 2 zurückreflektierte Strahlung. Je größer die Konzentration der Partikel 9 innerhalb der Umgebungsluft bzw. innerhalb des Detektionsbereiches 8 ist, desto höher ist die Amplitude des detektierten Messsignals. Das Messsignal wird anschließend mit Referenzdaten verglichen, die innerhalb der Speichereinrichtung 5 gespeichert sind. Sobald eine Übereinstimmung erkannt wird, können für diese Partikelkonzentration definierte Maßnahmen des Bodenbearbeitungsgerätes 1 gesteuert werden. Die Maßnahmen sind vorzugsweise ebenfalls innerhalb der Speichereinrichtung 5 gespeichert. Die zu der hier festgestellten Konzentration von Partikeln 9 festgelegten Maßnahmen können beispielsweise einen Betrieb der Luftreinigungseinrichtung 3 und einen Betrieb des Bodenbearbeitungselementes 6 beinhalten. Durch diese Maßnahmen werden zum einen Partikel 9 mittels der Luftreinigungseinrichtung 3 unmittelbar aus der Umgebungsluft aufgenommen. Hierzu kann die Luftreinigungseinrichtung 3 vorteilhaft ein Gebläse zum Ansaugen von Umgebungsluft und einen Partikelfilter aufweisen. Zum anderen werden auf dem Boden des Raumes befindliche Partikel 9 mittels des Bodenbearbeitungselementes 6 entfernt, nämlich im Rahmen einer Feuchtreinigung. Insgesamt ergibt sich somit besonders vorteilhaft eine Kombination aus einer Luftreinigung und einer Bodenreinigung, um die Partikel 9 optimal zu entfernen. Bei geringeren Konzentrationen der Partikel 9 kann beispielsweise vorgesehen sein, dass entweder nur das Bodenbearbeitungselement 6 oder nur die Luftreinigungseinrichtung 3 betrieben wird. Des Weiteren kann die Art der Reinigung auch von der Art der detektierten Partikel 9 abhängig sein. Sofern es sich beispielsweise um besonders große und schwere Partikel 9 handelt, welche schnell auf den Boden herabsinken, kann eine Reinigung mittels des Bodenbearbeitungselementes 6 besonders bevorzugt sein. Sofern es sich um eher kleine, relativ leichte Partikel 9 handelt, die sich lange innerhalb der Umgebungsluft halten, bietet sich vorrangig ein Betrieb der Luftreinigungseinrichtung 3 an, um die Partikel 9 direkt aus der Umgebungsluft zu entfernen.

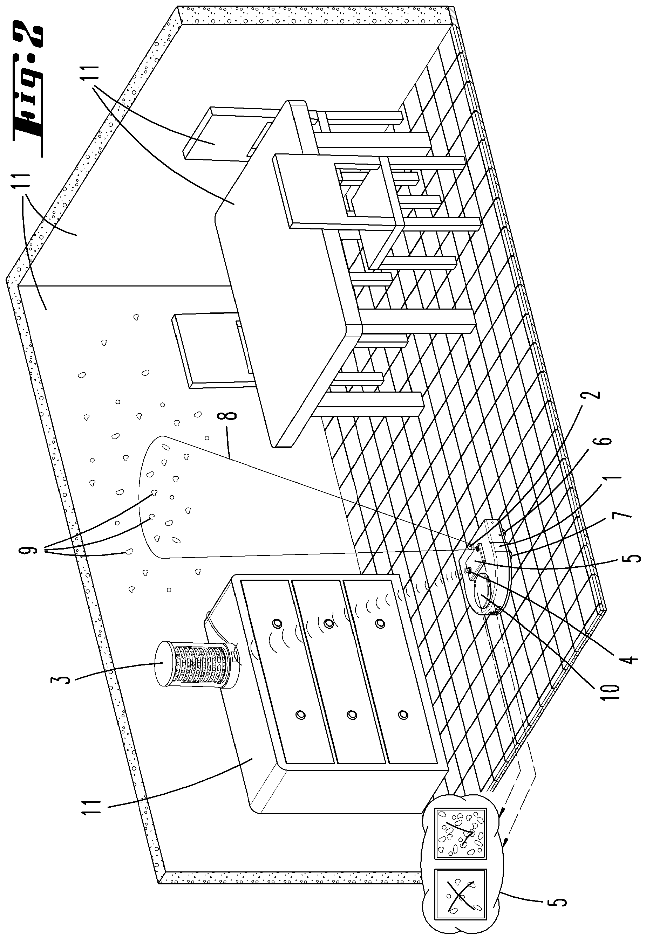

Figur 2 zeigt eine zweite Ausführungsform der Erfindung, welche von einem System Gebrauch macht, das neben einem sich selbsttätig fortbewegenden Bodenbearbeitungsgerät 1 des Weiteren eine separat dazu ausgebildete Luftreinigungseinrichtung 3 aufweist. Die Luftreinigungseinrichtung 3 steht in Kommunikation mit der Steuereinrichtung 4 des Bodenbearbeitungsgerätes 1, nämlich hier beispielsweise über eine WLAN-Verbindung. Die Steuereinrichtung 4 des Bodenbearbeitungsgerätes 1 dient gemäß dieser Ausführungsform als zentrale Steuereinrichtung 4, welche eingerichtet ist, die externe Luftreinigungseinrichtung 3 sowie auch die Komponenten des Bodenbearbeitungsgerätes 1, nämlich hier den Luftparametersensor 2 und das Bodenbearbeitungselement 6, zu steuern. Das Bodenbearbeitungsgerät 1 weist hier keine eigene Luftreinigungseinrichtung 3 auf, wobei jedoch auch Ausführungsformen denkbar sind, bei welchen das System sowohl eine externe Luftreinigungseinrichtung 3 als auch eine Luftreinigungseinrichtung 3 des Bodenbearbeitungsgerätes 1 aufweist. Des Weiteren ist es auch denkbar, dass das System mehrere Bodenbearbeitungsgeräte 1 und/ oder mehrere Luftreinigungseinrichtungen 3 und/oder mehrere Luftparametersensoren 2 aufweist, welche auch außerhalb des Bodenbearbeitungsgerätes 1 angeordnet sein können, beispielsweise innerhalb der Luftreinigungseinrichtung 3 oder an einer Wand des dargestellten Raumes.

Die Erfindung gemäß der in Figur 2 dargestellten Ausführungsform erfolgt so, dass der Luftparametersensor 2 des Bodenbearbeitungsgerätes 1 eine Konzentration von Partikeln 9 innerhalb des Detektionsbereiches 8 misst. Die Messdaten werden wiederum mit innerhalb der Speichereinrichtung 5 gespeicherten Referenzwerten verglichen. In Abhängigkeit von dem Ergebnis des Vergleichs bestimmt die Steuereinrichtung 4 Maßnahmen, um die detektierten Partikel 9 zu entfernen. Hier steuert die Steuereinrichtung 4 beispielsweise den Betrieb des Bodenbearbeitungselementes 6 und den Betrieb der externen Luftreinigungseinrichtung 3, wobei die Steuereinrichtung 4 über die WLAN-Verbindung einen Steuerbefehl an die externe Luftreinigungseinrichtung 3 übermittelt.

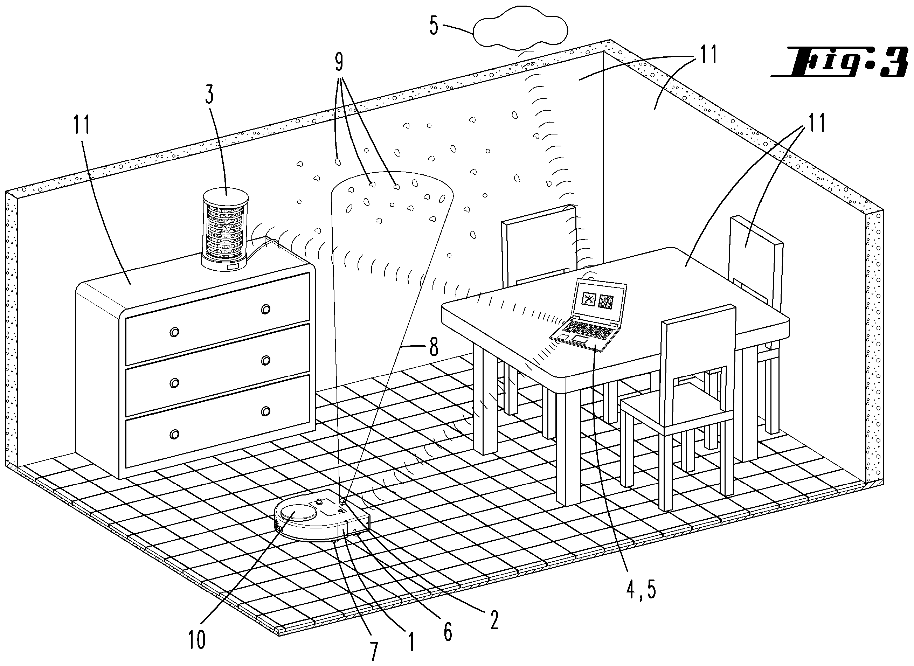

Figur 3 zeigt eine weitere Ausführungsform der Erfindung, welche ein System aus einem sich selbsttätig fortbewegenden Bodenbearbeitungsgerät 1, einer dazu separat ausgebildeten Luftreinigungseinrichtung 3 und einer separat dazu ausgebildeten, externen Steuereinrichtung 4 aufweist. Die Steuereinrichtung 4 ist hier Teil eines mobilen Endgerätes, nämlich hier eines Laptop-Computers. Das mobile Endgerät verfügt des Weiteren auch über eine lokale Speichereinrichtung 5. Des Weiteren ist das mobile Endgerät zusätzlich über eine Funkverbindung mit einer externen Speichereinrichtung 5 verbunden, nämlich hier einem Cloud-Server. Die externe Speichereinrichtung 5 beinhaltet eine Online-Datenbank, in welcher beispielsweise aktuelle Pollenflugvorhersagen gespeichert sind. Die Steuereinrichtung 4 weist eine Kommunikationsverbindung, nämlich hier Funkverbindung, zu dem Bodenbearbeitungsgerät 1 und zu der Luftreinigungseinrichtung 3 auf. Über diese Funkverbindung können Steuerbefehle von der Steuereinrichtung 4 an die Luftreinigungseinrichtung 3 bzw. das Bodenbearbeitungsgerät 1 übermittelt werden, und andererseits beispielsweise Messdaten von dem Bodenbearbeitungsgerät 1 an die zentrale Steuereinrichtung 4 übermittelt werden.

Gemäß dieser Ausführungsform funktioniert die Erfindung beispielsweise so, dass das Bodenbearbeitungsgerät 1 innerhalb des Raumes steht oder sich innerhalb des Raumes fortbewegt und dabei Partikel 9 innerhalb des Detektionsbereiches 8 des Luftparametersensors 2 misst. Die Messdaten werden über die Funkverbindung an die externe Steuereinrichtung 4, nämlich hier den Laptop, übermittelt. Dort werden die Messdaten mit Referenzdaten, welche innerhalb der lokalen Speichereinrichtung 5 des Laptops hinterlegt sind, verglichen. In Abhängigkeit von der Partikelkonzentration wird dann ein Steuerbefehl an die Luftreinigungseinrichtung 3 übermittelt, so dass die Luftreinigungseinrichtung 3 zum Aufsaugen von Partikeln 9 aus der Umgebungsluft betrieben wird. Des Weiteren wird auch ein Steuerbefehl von der zentralen Steuereinrichtung 4 an das Bodenbearbeitungsgerät 1 übermittelt, nämlich zum Betrieb des Bodenbearbeitungselementes 6, um bereits auf dem Boden befindliche Partikel 9 aufzuwischen. Der Luftparametersensor 2 misst kontinuierlich oder in bestimmten Zeitabständen weitere Partikelkonzentrationen innerhalb der Umgebungsluft und übermittelt diese an die zentrale Steuereinrichtung 4. Sofern festgestellt wird, dass die Partikelkonzentration wieder unter einen Schwellwert sinkt, kann die Luftreinigungseinrichtung 3 und/ oder das Bodenbearbeitungselement 6 ausgeschaltet werden. Des Weiteren greift die zentrale Steuereinrichtung 4 auf die innerhalb der externen Speichereinrichtung 5, nämlich der Cloud, gespeicherten Umweltdaten zu. Diese Umweltdaten beinhalten hier eine aktuelle Pollenflugvorhersage für eine Region, innerhalb welcher sich der dargestellte Raum befindet. Sofern festgestellt wird, dass aktuell ein starker Pollenflug herrscht, kann die Luftreinigungseinrichtung 3 und/ oder das Bodenbearbeitungselement 6 des Bodenbearbeitungsgerätes 1 gegebenenfalls weiterbetrieben werden, auch dann wenn die aktuell mittels des Luftparametersensors 2 des Bodenbearbeitungsgerätes 1 gemessene Pollenkonzentration unterhalb eines definierten Grenzwertes liegt. Es kann auch vorgesehen sein, dass innerhalb der lokalen Speichereinrichtung 5 der Steuereinrichtung 4 ein Reinigungsplan für das Bodenbearbeitungsgerät 1 gespeichert ist. Dieser Reinigungsplan kann beispielsweise wiederkehrende Reinigungseinsätze des Bodenbearbeitungsgerätes 1 an bestimmten Tagen, zu bestimmten Uhrzeiten oder dergleichen vorsehen. Der Reinigungsplan kann in Abhängigkeit von den in der externen Speichereinrichtung 5 stets aktualisierten Umweltdaten angepasst werden, so dass beispielsweise bei einer vorausgesagten hohen Pollenkonzentration innerhalb der nächsten Tage eine entsprechende Anpassung des Reinigungsplans erfolgt.

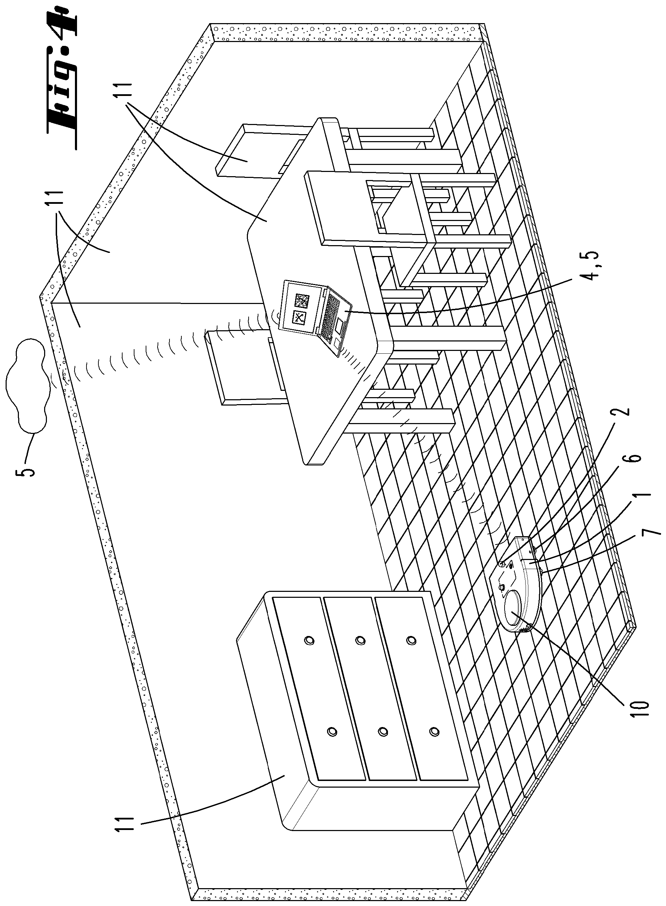

Figur 4 zeigt eine vierte Ausführungsform der Erfindung, bei welcher das Bodenbearbeitungsgerät 1 eine Kommunikationsverbindung zu einer externen Steuereinrichtung 4, nämlich hier einem Laptop, aufweist. Die Steuereinrichtung 4 weist eine Kommunikationsverbindung zu einer lokalen Speichereinrichtung 5 sowie einer externen Speichereinrichtung 5, nämlich hier einer Cloud, auf. Das Bodenbearbeitungsgerät 1 weist gemäß dieser Ausführungsform keinen eigenen Luftparametersensor 2 und keine eigene Luftreinigungseinrichtung 3 auf. Vielmehr verfügt das Bodenbearbeitungsgerät 1 in üblicher Art und Weise über ein Bodenbearbeitungselement 6. Ansonsten sind keine technischen Änderungen an dem Bodenbearbeitungsgerät 1 ausgeführt. Die externe Steuereinrichtung 4 dient einer zentralen Steuerung des Bodenbearbeitungsgerätes 1 und ggf. weiterer (nicht dargestellter) Bodenbearbeitungsgeräte 1. Zu diesem Zweck greift die Steuereinrichtung 4 auf die externe Speichereinrichtung 5 zu, in welcher eine Luftqualität betreffende Umweltdaten gespeichert sind, hier bspw. eine Pollenflugvorhersage für eine Region, innerhalb welcher der abgebildete Wohnraum liegt. Die Steuereinrichtung 4 ist ausgebildet, einen Steuerbefehl an das Bodenbearbeitungsgerät 1 zu übermitteln, wenn erkannt wird, dass die Speichereinrichtung 5 aktuelle Pollenflugvorhersagen aufweist, gemäß welchen die Pollenkonzentration über einem bestimmten Schwellwert liegt. Sodann kann die Steuereinrichtung 4 das Bodenbearbeitungsgerät 1 entweder aktuell für eine Bodenreinigungsaufgabe mittels des Bodenbearbeitungselementes 6 steuern, oder einen in einer lokalen Speichereinrichtung 5 der Steuereinrichtung 4 gespeicherten Einsatzplan so abändern, dass zum Zeitpunkt der angekündigten kritischen Pollenkonzentration ein oder mehrere Reinigungszyklen mittels des Bodenbearbeitungsgerätes 1 gesteuert werden. Insbesondere können die Reinigungszyklen des betreffenden Bodenbearbeitungsgerätes 1 so angepasst werden, dass an Tagen mit oder an Tagen nach erhöhter Pollenbelastung häufiger gereinigt wird, als dies der bisherige Einsatzplan vorgab. Bei einer Vernetzung mehrerer Bodenbearbeitungsgeräte 1 oder im Falle eines Bodenbearbeitungsgerätes 1 mit verschiedenen Bodenbearbeitungselementen 6 kann eine aufeinander abgestimmte Steuerung der Bodenbearbeitungselemente 6 erfolgen, welche bspw. bevorzugt eine Feuchtreinigung ausführt.

Obwohl dies in den gezeigten Ausführungsformen nicht dargestellt ist, kann es selbstverständlich vorgesehen sein, mehrere Bodenbearbeitungsgeräte 1, Luftparametersensoren 2, Luftreinigungseinrichtungen 3, Speichereinrichtungen 5 und/ oder Bodenbearbeitungselemente 6 innerhalb eines Systems zu betreiben. Die Komponenten des Systems sind vorzugsweise untereinander bekannt. Insbesondere kann eine Registrierungsprozedur vorgesehen sein, bei der die einzelnen Komponenten an der Steuereinrichtung 4 erfasst werden. Bei der Registrierung kann beispielsweise der jeweilige Gerätetyp, der Standort oder Weiteres erfasst werden. Die Registrierung kann automatisch durchgeführt werden, beispielsweise bei der Erstinbetriebnahme einer Komponente. Alternativ ist auch eine manuelle Eingabe durch einen Nutzer möglich. Anstatt der skizzierten Funkverbindung kann alternativ auch eine drahtgebundene Kommunikation zwischen Komponenten erfolgen, beispielsweise über PowerLAN.

### Liste der Bezugszeichen

- 1: Bodenbearbeitungsgerät
- 2: Luftparametersensor
- 3: Luftreinigungseinrichtung
- 4: Steuereinrichtung
- 5: Speichereinrichtung
- 6: Bodenbearbeitungselement
- 7: Rad
- 8: Detektionsbereich
- 9: Partikel
- 10: Hindernisdetektionseinrichtung
- 11: Hindernis

## Patentansprüche

1. Sich selbsttätig fortbewegendes Bodenbearbeitungsgerät (1) mit einem Bodenbearbeitungselement (6) zum Einwirken auf eine zu bearbeitende Fläche und einer Steuereinrichtung (4) zur Steuerung des Bodenbearbeitungselementes (6), **dadurch gekennzeichnet, dass** die Steuereinrichtung (4) ausgebildet ist, das Bodenbearbeitungselement (6) automatisch in Abhängigkeit von in einer externen Speichereinrichtung (5) gespeicherten, eine Luftqualität betreffenden Umweltdaten zu steuern.

2. Bodenbearbeitungsgerät (1) nach Anspruch 1, **dadurch gekennzeichnet, dass** das Bodenbearbeitungsgerät (1) eine Luftreinigungseinrichtung (3) zum Reinigen von Umgebungsluft aufweist, wobei die Steuereinrichtung (4) eingerichtet ist, die Luftreinigungseinrichtung (3) zu steuern.

3. System aus mindestens einem sich selbsttätig fortbewegenden Bodenbearbeitungsgerät (1), welches Bodenbearbeitungsgerät (1) ein Bodenbearbeitungselement (6) zum Einwirken auf eine zu bearbeitende Fläche aufweist, mindestens einem bezogen auf das Bodenbearbeitungsgerät (1) externen Luftparametersensor (2) und einer Steuereinrichtung (4), wobei die Steuereinrichtung (4) ausgebildet ist, in Abhängigkeit von einem Messergebnis des Luftparametersensors (2) das Bodenbearbeitungselement (6) und/ oder eine bezogen auf das Bodenbearbeitungsgerät (1) externe Luftreinigungseinrichtung (3) zum Reinigen von Umgebungsluft zu steuern.

4. System nach Anspruch 3, **dadurch gekennzeichnet, dass** der Luftparametersensor (2) ein Sensor der Luftreinigungseinrichtung (3) und/ oder der Steuereinrichtung (4) und/ oder ein einer externen, eine Luftqualität betreffende Umweltdaten aufweisenden Speichereinrichtung (5) zugeordneter Sensor ist.

5. System oder Bodenbearbeitungsgerät (1) nach einem der vorhergehenden Ansprüche, **dadurch gekennzeichnet, dass** die Steuereinrichtung (4) eine Kommunikationsverbindung zu einer externen Speichereinrichtung (5), insbesondere zu einem zentralen Webserver, aufweist, in welcher eine Luftqualität betreffende Umweltdaten gespeichert sind.

6. System oder Bodenbearbeitungsgerät (1) nach einem der vorhergehenden Ansprüche, **dadurch gekennzeichnet, dass** der Luftparametersensor (2) ein Partikelsensor, ein Pollensensor, ein Metallsensor, ein Staubsensor, ein Kohlenwasserstoff-Sensor, ein CO2-Sensor, ein SOx-Sensor, ein NOx-Sensor und/ oder ein Luftfeuchtesensor ist.

7. Verfahren zum Betrieb eines sich selbsttätig fortbewegenden Bodenbearbeitungsgerätes (1), wobei ein Bodenbearbeitungselement (6) auf eine zu bearbeitende Fläche einwirkt und wobei eine Steuereinrichtung (4) das Bodenbearbeitungselement (6) steuert, **dadurch gekennzeichnet, dass** die Steuereinrichtung (4) das Bodenbearbeitungselement (6) für eine Bodenbearbeitung der zu bearbeitenden Fläche unter Einsatz des Bodenbearbeitungselementes (6) automatisch in Abhängigkeit von in einer externen Speichereinrichtung (5) gespeicherten, eine Luftqualität betreffenden Umweltdaten steuert und/ oder eine bezogen auf das Bodenbearbeitungsgerät (1) externe Luftreinigungseinrichtung (3) zum Reinigen von Umgebungsluft automatisch in Abhängigkeit von in einer externen Speichereinrichtung (5) gespeicherten, eine Luftqualität betreffenden Umweltdaten steuert.

8. Verfahren nach Anspruch 7, **dadurch gekennzeichnet, dass** ein in einer Speichereinrichtung (5) hinterlegter Einsatzplan des Bodenbearbeitungsgerätes (1) in Abhängigkeit von gemessenen Luftparametern und/ oder eine Luftqualität betreffenden Umweltdaten geändert wird.

9. Verfahren zum Betrieb eines Systems aus mindestens einem sich selbsttätig fortbewegenden Bodenbearbeitungsgerät (1) und mindestens einem bezogen auf das Bodenbearbeitungsgerät (1) externen Luftparametersensor (2), wobei der Luftparametersensor (2) einen Parameter einer Umgebungsluft misst und eine Steuereinrichtung (4) in Abhängigkeit von einem Messergebnis des Luftparametersensors (2) ein Bodenbearbeitungselement (6) eines Bodenbearbeitungsgerätes (1) zum Reinigen einer Fläche unter Einsatz des Bodenbearbeitungselementes (6) und/ oder eine bezogen auf das Bodenbearbeitungsgerät (1) externe Luftreinigungseinrichtung (3) zum Reinigen von Umgebungsluft steuert.

10. Verfahren nach einem der Ansprüche 7 bis 9, **dadurch gekennzeichnet, dass** die Steuereinrichtung (4) auf eine externe Speichereinrichtung (5), insbesondere einen zentralen Webserver, zugreift, in welcher eine Luftqualität betreffende Umweltdaten gespeichert sind.

## Claims

1. An automatically moving floor treatment appliance (1) comprising a floor treatment element (6) for acting on a surface to be treated, and a control device (4) for controlling the floor treatment element (6), **characterized in that** the control device (4) is embodied to automatically control the floor treatment element (6) as a function of environmental data stored in an external storage device (5) and relating to an air quality.

2. The floor treatment appliance (1) according to claim 1, **characterized in that** the floor treatment appliance (1) has an air purification device (3) for purifying ambient air, wherein the control device (4) is set up to control the air purification device (3).

3. A system of at least one automatically moving floor treatment appliance (1), which floor treatment appliance (1) has a floor treatment element (6) for acting on a surface to be treated, at least one external air parameter sensor (2) with regard to the floor treatment appliance (1), and a control device (4), wherein the control device (4) is embodied to control the floor treatment element (6) and/or an external air purification device (3) with regard to the floor treatment appliance (1) to purify ambient air as a function of a measuring result from the air parameter sensor (2).

4. The system according to claim 3, **characterized in that** the air parameter sensor (2) is a sensor of the air purification device (3) and/ or of the control device (4) and/or a sensor assigned to an external storage device (5), which has environmental data relating to an air quality.

5. A system or floor treatment appliance (1) according to one of the preceding claims, **characterized in that** the control device (4) has a communication connection to an external storage device (5), in particular to a central webserver, in which environmental data relating to an air quality is stored.

6. The system or floor treatment appliance (1) according to one of the preceding claims, **characterized in that** the air parameter sensor (2) is a particle sensor, a pollen sensor, a metal sensor, a dust sensor, a hydrocarbon sensor, a CO2 sensor, a SOx sensor, a NOx sensor and/ or a humidity sensor.

7. A method for operating an automatically moving floor treatment appliance (1), wherein a floor treatment element (6) acts on a surface to be treated and wherein a control device (4) controls the floor treatment element (6), **characterized in that** the control device (4) automatically controls the floor treatment element (6) for a floor treatment of the surface to be treated by using the floor treatment element (6) as a function of environmental data stored in an external storage device (5) and relating to an air quality and/ or an external air purification device (3) with regard to the floor treatment appliance (1) for cleaning ambient air as a function of environmental data stored in an external storage device (5) and relating to air quality.

8. The method according to claim 7, **characterized in that** an operating plan of the floor treatment appliance (1), which is stored in a storage device (5), is changed as a function of measured air parameters and/or environmental data relating to an air quality.

9. A method for operating a system of at least one automatically moving floor treatment appliance (1) and at least one external air parameter sensor (2) with regard to the floor treatment appliance (1), wherein the air parameter sensor (2) measures a parameter of an ambient air and a control device (4) controls a floor treatment element (6) of a floor treatment appliance (1) to clean a surface using the floor treatment element (6) and/or an external air purification device (3) with regard to the floor treatment appliance (1) to clean ambient air as a function of a measuring result from the air parameter sensor (2).

10. The method according to one of claims 7 to 9, **characterized in that** the control device (4) accesses an external storage device (5), in particular a central webserver, in which environmental data relating to an air quality is stored.

## Revendications

1. Appareil de traitement du sol (1) se déplaçant automatiquement, avec un élément de traitement de sol (6) pour agir sur une surface à traiter et un dispositif de commande (4) pour commander l'élément de traitement de sol (6), **caractérisé en ce que** le dispositif de commande (4) est conçu pour commander automatiquement l'élément de traitement de sol (6) en fonction de données environnementales concernant une qualité de l'air qui sont mémorisées dans un dispositif de mémoire externe (5).

2. Appareil de traitement du sol (1) selon la revendication 1, **caractérisé en ce que** l'appareil de traitement du sol (1) comporte un dispositif de purification d'air (3) pour purifier l'air ambiant, le dispositif de commande (4) étant conçu pour commander le dispositif de purification d'air (3).

3. Système composé d'au moins un appareil de traitement du sol (1) se déplaçant automatiquement lequel appareil de traitement du sol (1) présente un élément de traitement de sol (6) pour agir sur une surface à traiter, au moins un capteur de paramètre(s) d'air (2) externe par rapport à l'appareil de traitement du sol (1) et un dispositif de commande (4), le dispositif de commande (4) étant conçu pour commander, en fonction d'un résultat de mesure du capteur de paramètre(s) d'air (2), l'élément de traitement de sol (6) et/ou un dispositif de purification d'air (3) pour purifier l'air ambiant, qui est externe par rapport à l'appareil de traitement du sol (1).

4. Système selon la revendication 3, **caractérisé en ce que** le capteur de paramètre(s) d'air (2) est un capteur du dispositif de purification d'air (3) et/ou du dispositif de commande (4) et/ou un capteur associé à un dispositif de mémoire externe (5) présentant des données environnementales concernant une qualité de l'air.

5. Système ou appareil de traitement du sol (1) selon l'une des revendications précédentes, **caractérisé en ce que** le dispositif de commande (4) présente une liaison de communication avec un dispositif de stockage externe (5), en particulier avec un serveur web central, dans lequel sont stockées des données environnementales concernant une qualité de l'air.

6. Système ou appareil de traitement du sol (1) selon l'une des revendications précédentes, **caractérisé en ce que** le capteur de paramètre(s) d'air (2) est un capteur de particules, un capteur de pollen, un capteur de métaux, un capteur de poussière, un capteur d'hydrocarbures, un capteur de CO2, un capteur de SOx, un capteur de NOx et/ou un capteur d'humidité de l'air.

7. Procédé de fonctionnement d'un appareil de traitement du sol (1) se déplaçant automatiquement, dans lequel un élément de traitement de sol (6) agit sur une surface à traiter et un dispositif de commande (4) commande l'élément de traitement de sol (6), **caractérisé en ce que** le dispositif de commande (4) commande automatiquement l'élément de traitement de sol (6) pour un traitement de sol de la surface à traiter en utilisant l'élément de traitement de sol (6) en fonction de données environnementales concernant une qualité de l'air qui sont enregistrées dans un dispositif de mémoire externe (5), et/ou commande automatiquement un dispositif de purification d'air (3) pour purifier l'air ambiant, qui est externe par rapport à l'appareil de traitement du sol (1), en fonction de données environnementales concernant une qualité de l'air qui sont mémorisées dans un dispositif de mémoire externe (5).

8. Procédé selon la revendication 7, **caractérisé en ce qu'**un plan d'action de l'appareil de traitement du sol (1) enregistré dans un dispositif de mémoire (5) est modifié en fonction de paramètres d'air mesurés et/ou de données environnementales concernant une qualité de l'air.

9. Procédé de fonctionnement d'un système composé d'au moins un appareil de traitement du sol (1) se déplaçant automatiquement et d'au moins un capteur de paramètre(s) d'air (2) externe par rapport à l'appareil de traitement du sol (1), dans lequel le capteur de paramètre (s) d'air (2) mesure un paramètre d'un air ambiant et un dispositif de commande (4) commande, en fonction d'un résultat de mesure du capteur de paramètre(s) d'air (2), un élément de traitement de sol (6) d'un appareil de traitement du sol (1) pour nettoyer une surface en utilisant l'élément de traitement de sol (6) et/ou un dispositif de purification d'air (3) pour purifier l'air ambiant, qui est externe par rapport à l'appareil de traitement du sol (1).

10. Procédé selon l'une des revendications 7 à 9, **caractérisé en ce que** le dispositif de commande (4) accède à un dispositif de stockage externe (5), en particulier un serveur web central, dans lequel sont stockées des données environnementales concernant une qualité de l'air.
